# EUROPEAN PATENT APPLICATION

(11) **EP 0 893 639 A1**
(43) Date of publication of application: **27.01.1999**
(21) Application number: 97830380.8
(22) Date of filing: 23.07.1997
(51) Int. Cl.: F16L 13/16

(54) **Means for the formation of hydraulic circuits and relating process**

(71) Applicant: Chibro S.p.A., 22100 Como (IT)
(72) Inventor: Pavan, Marcello, 22100 Como (IT)
(74) Representative: Lecce, Giovanni

(57) **Abstract**

Tubes (4) and the corresponding connecting accessories (1) for the formation of hydraulic circuits for highly corrosive fluids, such as sea water, saltish waters, brines, industrial waters and the like, having a high concentration of sodium chloride or other chlorides, are realised from metal alloys whose particular properties are an excellent resistance to saline corrosion, together with high physical and technological properties; in particular they are characterised by a high cold processability.

The above components are connected to one another for the formation of hydraulic circuits and the sealing connections between the parts, exploiting the characteristics of ductility and malleability of the above materials, exercising cold peripheral compressions on the joints, where elastic O-gaskets are interposed, housed in special toroidal recesses. Also said O-gaskets are formed from suitable elastic materials having a high ageing resistance.

## Description

This invention relates to the means and the relating process for the formation of hydraulic circuits for corrosive fluids having a high concentration of sodium chloride or other chlorides, in particular for sea water, saltish waters, brines, industrial waters and the like. The above means, composed by tubes, sleeves, branches, reductions, elbows, bends and the like, are made from metal alloys whose particular properties are an excellent resistance to saline corrosion and high physical and technological qualities, in particular a high cold plastic processability. Said means can be associated to one another, in mutual adhesion engagement by means of dovetailing-coupled parts allowing their coupling and peripheral mechanical compression, as function of their cold plastic processability. They are also sealing engaged by means of elastic O-gaskets, which are pre-assembled in special toroidal recesses obtained in the external components, during the same actions of mechanical compression.

The problems associated to hydraulic circuits for sea water or fluids in general having a high concentration of sodium chloride and/or other chlorides, especially as regards corrosion effects have being known for a long time. Until a few years ago, to realise circuits capable of withstanding saline corrosion for periods of time reasonably acceptable from the economic point of view, it was necessary to have recourse to the use of steel tubes and related connecting components having a considerable thickness, much greater than the thickness necessary to withstand the actual working conditions. Such increase in thickness was quantified based on the relation between the time when the reduction due to corrosion by sodium chloride or other chlorides contained in fluids would have developed and the overall maximum duration which the so configured hydraulic plant was required to provide, in order to respect the economic parameters considered. However, in practice, the above conditions had seldom the expected result, so that the intervention of extra-ordinary maintenance, replacement of prematurely corroded parts, modifications, etc. were commonplace events. In the techniques of more recent years, steel materials have been advantageously replaced by alloys with a low content of copper (Cu), zinc (Zn), nickel (Ni), aluminium (Al). Even though these alloys were more expensive than steel materials, they have anyhow allowed to achieve a remarkable saving, as they had better characteristics of resistance to saline corrosion, involving a longer duration of the plants, and also to allow marked reductions in the thickness of the components, with adequate reductions in weight and the cost of the material used. However, as is known, tubular components made from mineral-based alloys of the aforementioned type are at present associated to one another by utilising connection techniques that still significantly burden the general economy of design and construction of hydraulic plants for sea water or corrosive fluids in general having a high concentration of chlorides, both because of their intrinsic configuration and because of the time necessary for their formation. Actually, such connections are obtained at present by means of welded threaded couplings or by means of coupling flanges. In any case, it is obvious that, while being effective from the point if view of their specific objective, they are rather expensive, both because they require specific preventive interventions for the preparation of the joints by means of special apparatuses that can be used either in factory or on site (execution of the male/female threading on ends, preparation of edges to be welded, preparation and application of flanges), and because they involve long labour interventions for the assembly of said connections on plants.

Today, very advanced techniques propose components from titanium (Ti) and its alloys, by the exceedingly high cost of the raw material causes their use to be still uneconomic for conventional plants.

Object of this invention is to obviate the above drawbacks. The invention, as is characterised by the claims, solves the problem of the means and the related process for the formation of hydraulic circuits for sea water, industrial waters and/or corrosive fluids in general, based on chlorides, such as saltish waters, brines and the like, by which the following results are obtained: accessory tube components, such as joints, elbows, sleeves, branches, reducers, and the like, are made from pre-assembled elements already provided with the necessary toroidal recesses for housing the elastic O-gaskets; tubes and the related accessory components are made from copper (Cu), nickel (Ni), zinc (Zn), aluminium (Al) alloys which have a high resistance to saline corrosion and high physical and technological properties, among which an excellent plastic cold-processability; the joint between the connections and the end of the tubes is obtained by means of cold peripheral compressions of the dovetailing-coupled parts, which compression is exercised by specific manually, mechanically, hydraulicly, pneumaticly, electromechanically, elechtrohydraulicly acted tools, or the like. The mechanical resistance of joints is ensured by the geometric configuration of the components and by the characteristic elastic cold deformability of the coupled metal parts, while hydraulic sealing is achieved by the elastic deformation of O-gaskets engaged in the toroidal recesses, specifically made from elastomeric materials having a high ageing resistance.

The advantages achieved by the invention subject matter of the present application lie essentially in that:
a) the pre-assembly of accessory components from non-ferrous alloys having a high resistance to saline corrosion and provided with high physical and technological properties of ductility, malleability and high cold elastic processability,
b) the use of ageing resistant elastic O-gaskets,
c) the connections of the dovetailing-coupled parts with interposition of O-gaskets housed in the special toroidal recesses, carried out by means of annular cold-pressure of joint areas,
   allow to obtain a right compromise between the specific technology of configuration of the hydraulic circuits for sea water and/or corrosive fluids in general having a high concentration of chlorides, a high quality of sealings between the joined parts, duration of such circuits relatively to the high resistance to corrosion of the materials adopted, an easy and rapid composition of said circuits that can be carried out directly on site with the adoption of hand tools, mechanical, hydraulic, pneumatic, electropneumatic or electrohydraulic tools, or corresponding instruments, without any external contribution of materials and/or supplementary interventions, and the formation and ordinary maintenance costs of said circuits.

The invention is described in detail in the following, with reference to some specific embodiments reported only by way of non limiting example, with reference to the attached drawing, wherein:

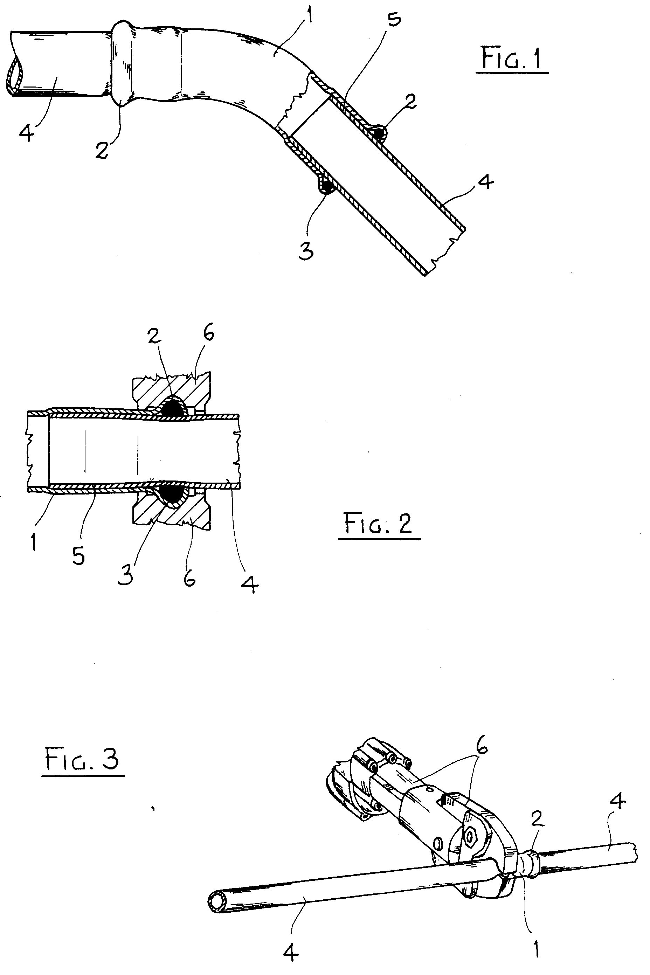

Figure 1 shows a connection example of tubular pans, with a partial section concerning a coupling prepared before the sealing,
Figure 2 shows the longitudinal section of a cold sealing between two elements fitted on onto another, and
Figure 3 shows an instrument during the cold peripheral pressing of a joint. The figures refer to connection means and the process for their utilisation for the formation of hydraulic circuits having a high concentration of sodium chloride or other chlorides such as for instance sea water, brines and the like, wherein all the components, such as tubes, sleeves, branches, reducers, elbows, bends and the like are made from metal alloys whose particular properties are represented by an excellent resistance to saline corrosion and physical and technological characteristics that are specifically high relatively to plastic cold-processability.

The physical and technological properties required for the specific objects of this invention are found to a significant extent in copper (Cu), nickel (Ni), zinc (Zn), aluminium alloys. In particular, but not limitedly, excellent results of suitability to the object, plastic cold-processability, resistance to saline corrosion and duration of the plants have been achieved by utilising alloys of the above type, that are already codified and comprised among the standardised ones in the reference norms for naval applications and the like.

Among these alloys, the most significant but non limiting ones, that are worthy pointing out are copper-nickel alloys having the codified initials UNS C 70600 and UNS C 71500, copper-zinc-aluminium-arsenic alloys (Aluminium Brass Arsenial having the codified initials UNS C 68700).

Tubes and accessory joint components for the formation of hydraulic circuits for sea water and/or fluids in general having a high concentration of chlorides, formed with metal alloys of the aforementioned type, have the characteristics of ductility, malleability, plastic cold-processability and a high resistance to sea corrosion, necessary for the specific use and the aims to be achieved.

The high characteristics of plastic cold-processability of the aforementioned metal alloys ensure the possibility of formation of accessory components, such as for instance sleeves (1), branches, reducers, elbows, bends and the like by means of cold workings, including the toroidal recesses of end (2) for housing elastic sealing O-gaskets (3). Said workings are easily obtainable also on details having rather consistent thicknesses, for instance of several millimetres. Such possibility, together with the more quantifiable and known high resistance to saline corrosion of the adopted metal alloys allows designers a more precise sizing of hydraulic circuits, depending on the expected and wished duration.

The figures show that accessory components (1) have a greater inner diameter, suitable to house the ends of the tubular elements (4) to be sealed to one another. The union of the parts provides for a pre-contact of the elastic sealing O-gaskets (3) comprised in the toroidal recesses (2), with the external peripheral surface of ends (5) of tubes (4) introduced into the ends of the connection accessory components (1).

By means of a later action of mechanical compression, exercised radially on the peripheral area of the accessory components (1), the ends of said components are plastically cold-deformed until they are brought in a relation of close adhesion and complementary plastic cold-deformation with the corresponding and underlying ends (5) of tubes (4), while the elastic O-gaskets (3) are pressed until they are brought in sealing relation with the external peripheral surface of said ends (5).

The mechanical compression necessary to the plastic cold-deformation of mutual connection of the coupled parts may be obtained, preferably but not limitedly, by means of electropneumatic or electrohydraulic equipments (6) of a known type; it s however obvious that the same action may be obtained with any other radial pressing instruments of a mechanical, hydraulic, pneumatic type or the like, suitable for the aim. In order to obtain the maximum guarantee about the sealing between the parts, also the elastomeric materials that constitute the elastic O-gaskets (3) have been specifically chosen among those having characteristics of high ageing resistance to the saline sea-water and/or fluids having a high concentration of chlorides.

While this invention has been described and illustrated with reference to some embodiments provided only by way of non limiting example, it will be obvious to those skilled in the art that various modifications in the configuration of accessory components, the geometry of the various parts, the configurations and the working of the mechanical pressing means for the plastic deformation of metals, and in the use of metals other that those indicated, but having in any case properties corresponding to the useful ones indicated hereabove, may be provided and used, without exceeding the protection scope of the invention.

## Claims

1. Means for the formation of hydraulic circuits for corrosive fluids comprising tubes and accessory components that can be associated to one another by dovetailing joints with the interposition of O-gaskets, characterised in that said tubes (4) and said accessory components (1) are made from metal alloys whose particular properties lie in an excellent resistance to saline corrosion of fluids containing chlorides in general, such as sea water, industrial waters, brines, saltish waters and the like, together with high physical and technological characteristics, in particular a high plastic cold-processability, and in that said O-gaskets (3) are also from elastic materials having high characteristics of ageing resistance; said tubes (4) and said accessory components (1) being associable to one another, in a mutual superposed engagement, relatively to their plastic cold-deformability and mutual adhesion under the effect of an external, or in any case peripheral radial compression.

2. The means for the formation of hydraulic circuits for sea water and/or corrosive fluids having a high concentration of sodium chloride or other chlorides according to claim 1, characterised in that tubes (4) and accessory components (1) are made from copper (Cu), zinc (Zi), nickel (Ni), aluminium (Al) metal alloys having particular properties comprising an excellent resistance to saline corrosion and to chlorides in general, together with physical and technological properties of high plastic cold-processability

3. The means for the formation of hydraulic circuits for sea water and/or corrosive fluids having a high concentration of sodium chloride or other chlorides according to claims 1 or 2, characterised in that tubes (4) and accessory components (1) are made from copper (Cu) and nickel (Ni) metal alloys having particular properties comprising an excellent resistance to saline corrosion and to chlorides in general, together with physical and technological qualities of high plastic cold-processability; in particular, they are made from copper-nickel alloys UNS C 70600 and UNS C 71500.

4. The means for the formation of hydraulic circuits for sea water and/or corrosive fluids having a high concentration of sodium chloride or other chlorides according to claims 1 and 2, characterised in that tubes (4) and accessory components (1) are made from copper (Cu), zinc (Zi) and aluminium metal alloys having particular properties comprising an excellent resistance to saline corrosion and to chlorides in general, together with physical and technological properties of high plastic cold-processability; in particular, they are made from copper, zinc, aluminium, arsenic alloys (Aluminium Brass, such as UNS C 68700).

5. The means for the formation of hydraulic circuits for sea water and/or corrosive fluids having a high concentration of sodium chloride or other chlorides according to claims 1 and 2, characterised in that sealing O-gaskets (1) are from elastomeric elastic materials having high characteristics of ageing resistance to the chlorides

6. The means for the formation of hydraulic circuits for sea water and/or corrosive fluids having a high concentration of sodium chloride or other chlorides according to any one of the preceding claims 1 to 5, characterised in that the accessory components (1) have increased internal diameters, wherein ends (5) of tubular elements (4) to be seal-connected are inserted, and comprise toroidal seat (2) for housing sealing O-gaskets (3).

7. The means for the formation of hydraulic circuits for sea water and/or corrosive fluids having a high concentration of sodium chloride or other chlorides according to any one of the preceding claims 1 to 6, characterised in that the tubes (4) and accessory components (1) are in mutual sealing engagement with a mechanical compression exercised on the peripheral area of the accessory components (1), with which area the ends of the same components are plastically cold-deformed until they are in a relation of mutual adhesion and complementary plastic cold-deformation with the corresponding and underlying ends (5) of tubes (5), while the elastic O-gaskets (3), contained in the toroidal recesses (2) seal-engage with the peripheral external surface of said ends (5).

8. The means for the formation of hydraulic circuits for sea water and/or corrosive fluids having a high concentration of sodium chloride or other chlorides according to any one of the preceding claims 1 to 7, characterised in that tubes (4) and accessory components (1) are in a relation of mutual seal-engagement, with mutual adhesion and complementary cold plastic deformation through a mechanical compression of the peripheral area of said accessory components (1) exercised with electrohydraulic or electropneumatic equipments, or also other radial pressing instruments of the mechanical, hydraulic, pneumatic type, or the like.

9. The means for the formation of hydraulic circuits for sea water as described and illustrated, according to the preceding claims and for the purposes specified.
